# FASCICULE DE BREVET EUROPEEN

(11) **EP 0 595 373 B1**
(45) Date de publication et mention de la délivrance du brevet: **22.08.2001**
(21) Numéro de dépôt: 93120678.3
(22) Date de dépôt: 14.12.1989
(51) Int. Cl.: A61C 15/04

(54) **Dispositif de nettoyage dentaire avec son fil intermédiaire**
Zahnreinigungsvorrichtung mit interdentalem Seidenfaden
Tooth-cleaning device with interdental thread

(30) Priorité: 19.12.1988 FR 8816729; 27.04.1989 FR 8905618; 27.06.1989 FR 8908509
(43) Date de publication de la demande: 04.05.1994
(62) Demande divisionnaire de: 89403475.0
(73) Titulaire: Barth, Frédéric, F-91190 Gif-sur-Yvette (FR)
(72) Inventeur: Barth, Frédéric, F-91190 Gif-sur-Yvette (FR)
(74) Mandataire: Casalonga, Axel

(56) Documents cités:
- EP-A- 0 037 434
- US-A- 3 930 059

## Description

La présente invention se rapporte à un fil interdentaire et à son dispositif de nettoyage dentaire comprenant un instrument en forme de fourche à deux branches dont chacune comporte un chas au voisinage de son extrémité libre, les deux chas étant alignés pour recevoir un fil interdentaire. Par ailleurs, le dispositif de nettoyage dentaire avec son fil comporte des moyens de maintien perfectionnés du fil interdentaire.

Il est à rappeler que seul le fil intermédiaire et l'instrument de nettoyage dentaire qui présente une fente et une pince pour le maintien et le blocage de la tige-guide du fil intermédiaire font partie de la présente invention.

La mastication provoque inévitablement, chez tout être humain denté, des infiltrations alimentaires interdentaires. La non élimination des tassements alimentaires qui en résultent est à l'origine des caries proximales et de maladies parodontales.

L'utilisation d'une brosse à dents ne permet pas le nettoyage de ces espaces anatomiques qui sont par contre accessibles aux jets d'eau interdentaires d'appareils dits hydropulseurs, aux fils interdentaires et autres brossettes et cure-dents. L'hygiène interdentaire idéale consiste à utiliser simultanément le fil interdentaire et les jets (voir en particulier le document US-A-4 031 908 et le document EP-A-37434).

Par effet mécanique, le fil interdentaire permet de déloger les fibres alimentaires coincées au niveau même du point de contact, ce que ne peut pas faire un jet, puis, par des mouvements verticaux alternatifs de faible amplitude, de racler les faces mésiales et distales des deux dents adjacentes. C'est l'usage du fil interdentaire qui permet la prévention des caries jumelles du point de contact. Le fil est supérieur à l'action du jet en ce sens qu'il déloge à coup sûr les fibres coincées au niveau même du point de contact, alors que le jet ne peut pas en venir à bout. Le fil par son action mécanique de raclage est encore supérieur au jet quant à la qualité de l'état de surface obtenu.

Tous les aspects décrivants le nettoyage par jets d'eau sortant des orifices de la fourche du dispositif de nettoyage ne font pas parties de l'invention.

Le jet par contre a l'avantage de pouvoir déloger rapidement les tassements alimentaires déjà passés sous le point de contact et pouvant être éliminés latéralement par pression d'eau. Mais outre la moins bonne qualité de l'état de surface obtenu, le jet peut être dangereux à l'utilisation. En effet, surtout au plus fort réglage de la pression, il faut éviter impérativement d'orienter le jet obliquement dans le sens dent-gencive, ce qui entraînerait à la longue un décollement de la gencive. Le danger est alors que l'utilisation quotidienne du jet devient un cofacteur de destruction parodontale.

Pour ne pas nuire, le jet devrait donc être manipulé avec rigueur et discernement, c'est-à-dire en maîtrisant constamment l'orientation du jet d'eau perpendiculairement aux grands axes des dents ou obliquement dans le sens gencive-dent.

Pratiquement, il s'avère très difficile voire impossible, avec les appareils connus à hydropulseur, de maîtriser parfaitement cette orientation optimale dans tous les espaces interdentaires d'une même bouche, le jet étant produit par une canule qui est simplement tenue à la main.

Avec l'âge où la maladie parodontale, la gencive papillaire peut se rétracter et disparaître. Les embrasures largement ouvertes qui en résultent se remplissent volontiers de tassements alimentaires qu'il est commode de nettoyer avec un jet bien orienté ou une brossette interdendaire montée sur un manche ou autre cure-dent.

Parmi les différents systèmes de fil interdentaire, il existe des porte-fil jetables avec un fil interdentaire serti aux extrémités des deux branches d'une fourche. D'autres systèmes de fil interdendaire comportent un porte-fil en forme de fourche avec deux chas dans lequel le fil doit être enfilé ce qui est difficile. Par ailleurs, il existe des systèmes de fil interdentaire avec une fourche comportant dans ses deux branches des encoches de réception du fil, ce qui simplifie la mise en place du fil, mais le maintien du fil dans ces encoches est aléatoire au montage et à l'utilisation, notamment lors du désengagement du point de contact.

Enfin, il est déjà connu par le brevet US n° 4 031 908 de prévoir, sur un même dispositif de nettoyage dentaire, l'utilisation d'un fil interdentaire maintenu entre les deux branches d'une fourche, et l'utilisation d'un jet d'eau émis par l'une des branches de la fourche en direction de l'autre branche, de façon adjacente à la position du fil interdentaire. Ce dispositif connu présente cependant un certain nombre d'inconvénients.

Du fait de la présence d'un jet d'eau unique, ce dispositif ne permet qu'un rinçage dans un sens en une seule manipulation, un rinçage dans les deux sens nécessitant une double manipulation. Or, il arrive souvent qu'un rinçage dans un seul sens ne permette pas de déloger correctement les tassements alimentaires dans les deux embrasures interdentaires, vestibulaire et linguale.

Par ailleurs, pour permettre cette double manipulation, il est nécessaire que la fourche de ce dispositif connu soit une fourche plate, alors qu'un porte-fil interdentaire doit de préférence présenter la forme d'une fourche incurvée pour pouvoir accéder correctement à toutes les dents.

De plus, du fait de cette nécessité de double manipulation, le jet d'eau peut être conçu uniquement de manière à agir perpendiculairement aux grands axes des dents car si le jet étant incliné, il serait orienté correctement dans le sens gencive-dent lors de la première manipulation, mais serait obligatoirement orienté dans le mauvais sens, c'est-à-dire le sens dent-gencive lors de la deuxième manipulation, après retournement de 180° du dispositif.

En plus de ces problèmes dus à la présence d'un jet d'eau unique, il faut noter que sur ce dispositif connu, le remplacement d'un tronçon de fil interdentaire rompu par un nouveau tronçon de fil interdentaire et la mise sous tension correcte de ce tronçon de fil interdentaire présentent des difficultés dans la mesure où, d'une part, les deux chas prévus à l'extrémité libre des deux branches de la fourche sont très fins de sorte qu'il n'est pas facile d'enfiler le fil interdentaire dans ces chas et que, d'autre part, le blocage sous tension du fil interdentaire s'effectue par serrage des deux brins du fil entre le corps (poignée) du dispositif et la tête en forme de fourche, lesdites deux parties étant reliées par vissage.

La présente invention a pour objet un dispositif de nettoyage dentaire comportant des moyens pour le blocage simple, rapide et fiable d'un fil interdentaire sous tension. L'invention a en outre pour objet un fil interdentaire pouvant être monté et maintenu tendu d'une manière simple et fiable sur un porte-fil en forme de fourche à deux branches. L'invention a également pour objet un ensemble de plusieurs fils interdentaires de fabrication simple et d'utilisation aisée.

Le dispositif de nettoyage dentaire conforme à l'invention comprend un instrument en forme de fourche à deux branches, avec deux chas pour le passage et le maintien d'un fil interdentaire au voisinage de l'extrémité libre desdites deux branches.

Le fil interdentaire destiné à être utilisé sur un tel instrument en forme de fourche à deux branches dont chacune comporte un chas au voisinage de son extrémité libre, les deux chas étant alignés, est constitué par un tronçon de fil de longueur suffisante pour permettre son montage sur ledit instrument. Une extrémité de ce tronçon de fil est solidaire d'une tige-guide de longueur supérieure à l'écartement des deux branches de l'instrument à l'endroit desdits chas, et l'autre extrémité est solidaire d'un bouton d'arrêt.

Grâce à la tige-guide, le tronçon de fil peut être enfilé d'une manière très simple et rapide dans les chas de l'instrument. Après cet enfilage, l'utilisateur tire sur la tige-guide jusqu'à ce que le bouton d'arrêt prévu à l'autre extrémité du fil vienne porter de l'extérieur contre l'une des branches de la fourche, ce qui bloque ladite extrémité du fil par rapport à l'instrument. Il suffit ensuite de tendre le fil interdentaire, par une traction exercée sur l'extrémité solidaire de la tige-guide, et de bloquer cette extrémité du fil sur l'instrument.

Le bouton d'arrêt en forme de champignon du fil interdentaire peut avantageusement présenter une tête et un pied permettant le maintien du bouton par friction ou par encliquetage dans le chas en cas de rupture du tronçon de fil en bouche.

Pour améliorer la préhension, la tige-guide solidaire d'une extrémité du tronçon de fil peut présenter à son extrémité libre un renflement de préhension.

Le fil interdentaire portant un bouton d'arrêt à une extrémité et une tige-guide à son autre extrémité présente une longueur calibrée. L'instrument en forme de fourche destiné à recevoir ce fil interdentaire porte des moyens pour recevoir et bloquer instantanément la tige-guide à l'état tendu du fil interdentaire, constitués par une butée-guide fendue pour recevoir et servir de butée à l'extrémité de la tige-guide tournée vers le bouton d'arrêt, et peuvent comprendre une pince pour le maintien et le blocage de ladite tige contre l'instrument,

Les fils interdentaires comportant un bouton d'arrêt à une extrémité et une tige-guide à l'autre extrémité peuvent avantageusement être fabriqués et commercialisés sous la forme d'un ensemble de plusieurs tronçons de fils disposés côté à côte dans un plan dont les boutons d'arrêt et les tiges-guides sont reliés par des parties frangibles de section réduite à deux branches opposées d'un cadre moulé d'une seule pièce en matière plastique avec les boutons d'arrêt et les tiges-guides, les extrémités des fils étant surmoulées par les boutons d'arrêt et par les tiges-guides.

En se référant au dessin annexé, on va décrire ci-après plus en détail plusieurs modes de réalisation du dispositif de nettoyage dentaire conforme à l'invention; sur les dessins :
la figure 1 est une vue en perspective d'un instrument en forme de fourche servant de porte-fil interdentaire;
la figure 2 est une vue en perspective de ce même instrument connecté à un hydropulseur pour servir d'appareil de nettoyage dentaire à double jet d'eau;
la figure 3 est une vue en perspective de ce même instrument dans sa double fonction de porte-fil interdentaire et d'appareil de nettoyage dentaire à double jet d'eau;
la figure 4 représente une variante de l'instrument avec production de jets d'eau multiples par chaque branche de l'instrument en forme de fourche;
la figure 5 représente une variante de l'instrument avec deux jets d'eau obliques convergeant dans le sens gencive-dent;
la figure 6 montre l'instrument dans sa version double jet d'eau et porte-brossette;
la figure 7 représente l'instrument dans sa version double jet d'eau et porte-pinceaux;
la figure 8 représente un mode de réalisation du fil interdentaire conforme à l'invention;
les figures 9a à 9d illustrent la mise en place d'un fil interdentaire suivant la figure 8 sur un instrument en forme de fourche suivant les figures 1 à 3;
la figure 10 représente un instrument en forme de fourche avec des moyens de blocage rapide du fil interdentaire;
les figures 11 et 12 sont des coupes suivant A-A et B-B de la figure 10;
la figure 13 est une vue latérale de l'instrument en forme de fourche de la figure 10 avec un fil interdentaire bloqué sur l'instrument;
la figure 14 représente un fil interdentaire avec une tige-guide comportant des stries ou encoches de réglage de tension;
la figure 15 représente un instrument en forme de fourche avec des moyens de guidage et de blocage réglable d'un fil interdentaire suivant la figure 14;
la figure 16 représente un ensemble de fils interdentaires conforme à l'invention.

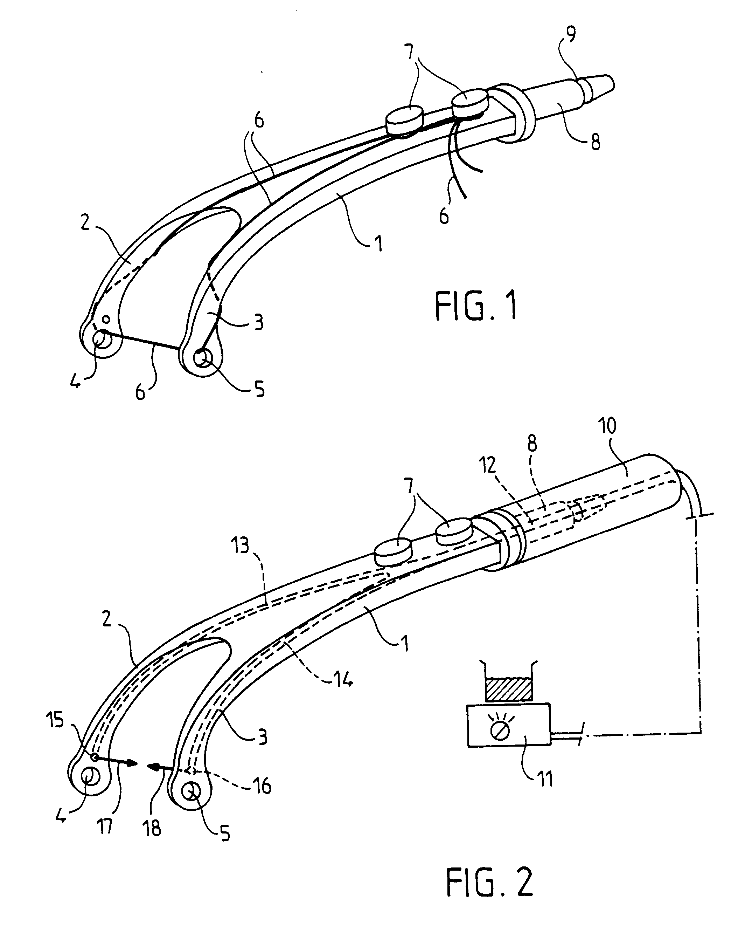

Selon la figure 1, un instrument de nettoyage dentaire comprend un corps 1 se terminant à une extrémité par une fourche à deux branches 2, 3. Les deux branches 2, 3 de la fourche sont inclinées par rapport au corps 1 de manière quele plan commun des branches 2, 3 fasse, à l'extrémité libre des branches, un angle d'environ 45° avec le plan du corps 1 de l'instrument, les deux branches 2, 3 s'écartant l'une de l'autre de façon symétrique par rapport à l'axe longitudinal du corps 1.

Au voisinage de leur extrémité libre, les branches 2 et 3 du corps 1 comportent deux chas 4 et 5 alignés dans lesquels passe un fil interdentaire 6 dont les deux extrémités sont enroulées et coincées sur deux taquets 7 disposés sur le corps 1.

A son extrémité opposée, le corps 1 se termine par un embout de jonction 8 pour l'emboîtement dans le manche d'un hydropulseur, comme décrit plus en détail en référence à la figure 2. L'embout 8 comporte une gorge 9 correspondant à un joint d'étanchéité contenu dans le manche de l'hydropulseur, et un épaulement coloré est prévu entre le corps 1 et l'embout 8 pour individualiser l'instrument.

Selon la figure 2 sur laquelle le corps 1 de l'instrument est raccordé au manche 10 d'un hydropulseur 11, on reconnaît que l'embout 8 et le corps 1 sont traversés par un conduit 12 qui, à l'intérieur du corps 1, se divise en deux conduits 13 et 14 aboutissant au voisinage des extrémités libres des branches 2 et 3 où ils débouchent, à proximité des chas 4 et 5, sur la face interne des branches, par deux orifices 15 et 16 orientés de telle manière qu'ils permettent la sortie de deux jets d'eau 17 et 18 de sens contraire lorsque l'hydropulseur 11 est en marche.

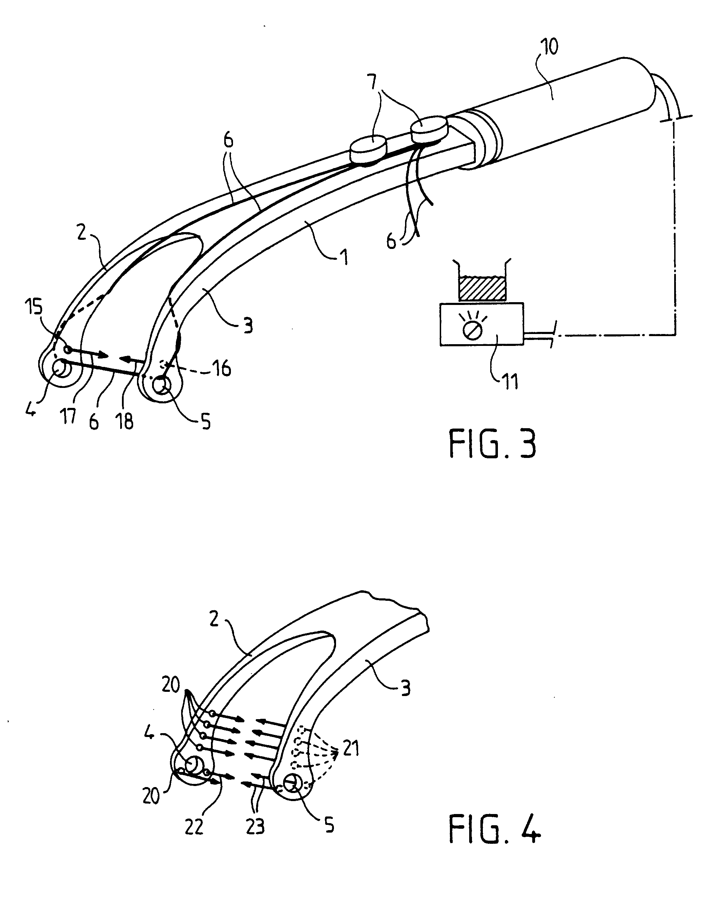

Sur la figure 3, l'instrument suivant les figures 1 et 2 est utilisé simultanément comme instrument de nettoyage avec fil interdentaire 6 selon la figure 1 et comme instrument de nettoyage avec double jet d'eau 17, 18 selon la figure 2.

Dans la variante représentée par la figure 4, les deux orifices 15 et 16 prévus suivant la figure 2 dans les deux branches 2 et 3 de la fourche pour produire deux jets d'eau 17, 18 de sens contraire sont remplacés par une pluralité d'orifices 20 et 21 produisant deux jets multiples 22 et 23 formant deux douchettes de sens contraire.

En ce qui concerne les deux jets d'eau 17, 18 de sens contraire selon les figures 2 et 3, de même que les deux jets d'eau multiples 22, 23 de sens contraire selon la figure 4, il y a lieu de noter que ces jets sont parallèles, mais sont décalés dans le sens de la longueur du corps 1 de l'instrument, comme cela apparaît clairement sur les figures 2 à 4.

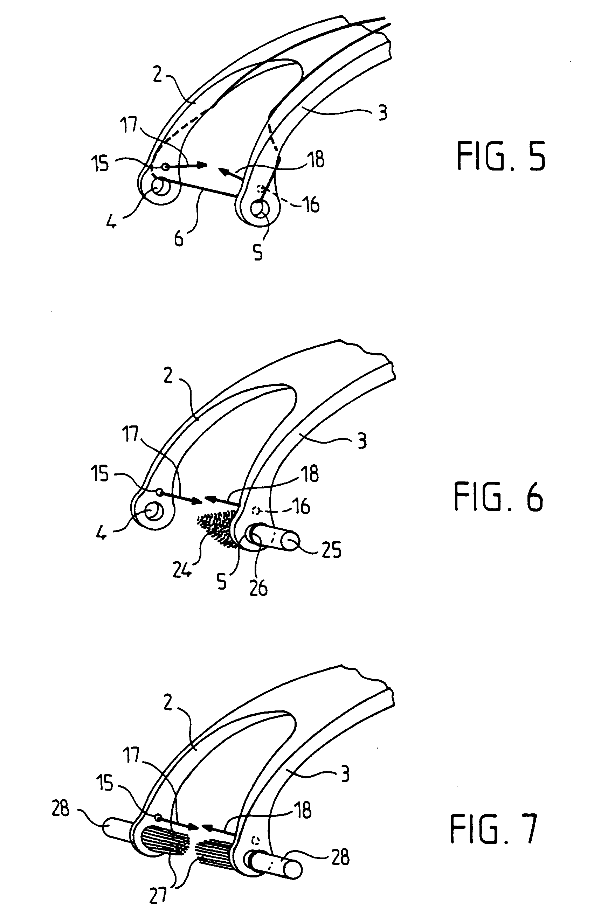

Selon la figure 5, les deux orifices 15 et 16 prévus dans les deux branches 2 et 3 sont orientés de manière à produire deux jets d'eau 17 et 18 obliques, convergeant dans le sens gencive-dent. Ainsi les deux jets sont automatiquement bien orientés sans risquer d'entraîner un décollement gingival préjudiciable à la bonne santé parodontale.

Selon la figure 6, l'un des deux chas 4 et 5, à savoir le chas 5 de la branche 3 de l'instrument en forme de fourche, reçoit une brossette 24 à poils radiaux dont le corps 25 est emboîté depuis l'intérieur de la fourche dans le chas 5 et y est maintenu par friction ou par un épaulement ou anneau d'encliquetage 26, de manière que la brossette 24 fasse saillie sur la branche 3 en direction de l'autre branche 2.

Bien entendu, le chas 4 de l'autre branche 2 peut également recevoir une telle brossette orientée vers la branche 3.

Suivant la figure 7, deux pinceaux 27 à poils axiaux sont fixés dans les deux chas des deux branches 2 et 3, leurs corps 28 étant emboîtés et maintenus par friction ou encliquetage de la même manière que pour les brossettes de la figure 6.

Il y a lieu de noter qu'aussi bien les brossettes 24 selon la figure 6 que les pinceaux 27 selon la figure 7, utilisables de préférence simultanément avec un double jet d'eau 17, 18, peuvent être également utilisés simultanément avec un fil interdentaire 6 suivant les figures 1, 3 et 5, les chas 4 et 5 permettant à la fois le passage d'un fil interdentaire 6 et l'emboîtement des corps 25, 28 des brossettes 24 ou pinceaux 27.

Le fil interdentaire 6 utilisé suivant les modes de réalisation décrits jusqu'à présent est constitué par une longueur de fil interdentaire retirée d'une bobine de fil du commerce. A l'usage, un tel fil se casse au moins une fois lors du nettoyage complet de tous les espaces interdentaires. Il doit donc être changé au moins une fois à chaque utilisation.

Cette opération de changement consiste à dérouler et à couper d'une bobine une longueur suffisante de fil dont on accroche une extrémité sur le corps de l'instrument, par exemple sur les taquets 7. On passe ensuite l'autre extrémité du fil à travers les chas 4 et 5. On termine la mise en place du fil en tendant ce dernier par traction sur son autre extrémité avant d'accrocher cette autre extrémité sur le corps de l'appareil, par exemple sur les taquets 7.

Dans la pratique, cette opération de changement de fil s'effectue plus ou moins facilement selon la dextérité de l'utilisateur. En effet, pour le changement du fil, il faut
a) dérouler de la bobine une longueur suffisante de fil (pas trop longue pour éviter le gaspillage, pas trop courte sinon on ne peut pas monter le fil),
b) monter le fil en lui faisant suivre un chemin particulier et en le passant dans les chas, ce qui, même avec des chas d'un diamètre nettement supérieur au diamètre du fil, nécessite une certaine dextéritié et demande un certain temps;
c) opérer ce montage généralement les mains mouillées, ce qui fait que le fil devient collant et ne se laisse pas guider facilement.

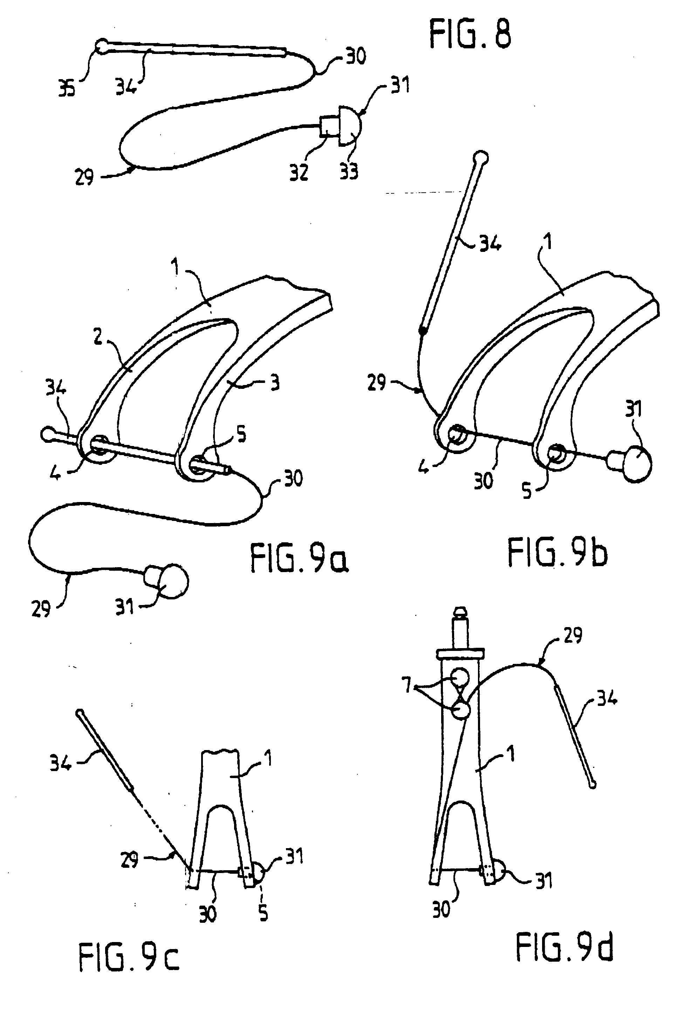

La figure 8 représente un fil interdentaire qui simplifie considérablement le montage du fil sur le corps de l'instrument et permet un changement de fil rapide.

Selon la figure 8, le fil interdentaire 29 est constitué par un tronçon de fil interdentaire 30 de longueur suffisante pour permettre son installation sur un instrument suivant les figures 1 et 3. Le tronçon de fil 30 comporte à l'une de ses extrémités un bouton d'arrêt 31 en forme de champignon, comprenant un pied 32 dont le diamètre est sensiblement égal au diamètre des chas 4 et 5, et une tête 33.

A son autre extrémité, le tronçon de fil 30 comporte une tige-guide 34 rectiligne présentant à son extrémité libre un renflement de préhension 35 dont le diamètre est inférieur au diamètre des chas 4 et 5. La longueur de la tige-guide 34 est supérieure à la distance séparant les deux branches 2 et 3 du corps d'instrument 1 à l'endroit des chas 4 et 5.

Selon les figures 9a à 9d, le montage du fil interdentaire 29 selon la figure 8 consiste à faire passer la tige-guide 34 du fil 29 directement à travers les deux chas 4 et 5 (figure 9a) qui doivent présenter un diamètre supérieur au diamètre maximal de la tige-guide 34 (à l'endroit du renflement 35), à tirer ensuite le fil 29 à travers les deux chas 4 et 5 (figure 9b) jusqu'à l'insertion du pied 32 du bouton 31 dans l'un des chas, en l'occurrence le chas 5 (figure 9c), à tendre le fil 29 et à l'accrocher finalement sur le corps 1 en l'enroulant et en le bloquant sur les taquets 7 (figure 9d).

Bien entendu, il serait possible de bloquer le fil 29 sur le corps d'instrument 1 également par des moyens autres que les taquets 7, par exemple des systèmes à clipsage ou à encliquetage ou analogue.

Afin d'éviter les traumatismes de la muqueuse buccale, la tête 33 du bouton d'arrêt 31 présente une forme arrondie, de préférence une forme hémisphérique.

Le pied 32 du bouton d'arrêt 31 est avantageusement conformé de manière à permettre son maintien par friction ou par encliquetage dans l'un des chas 4, 5 lors de la rupture en bouche du tronçon de fil 30.

Le fil interdentaire 29 suivant la figure 8 peut être muni de son bouton d'arrêt 31 et de sa tige-guide 34 par surmoulage-injection de matière plastique rigide.

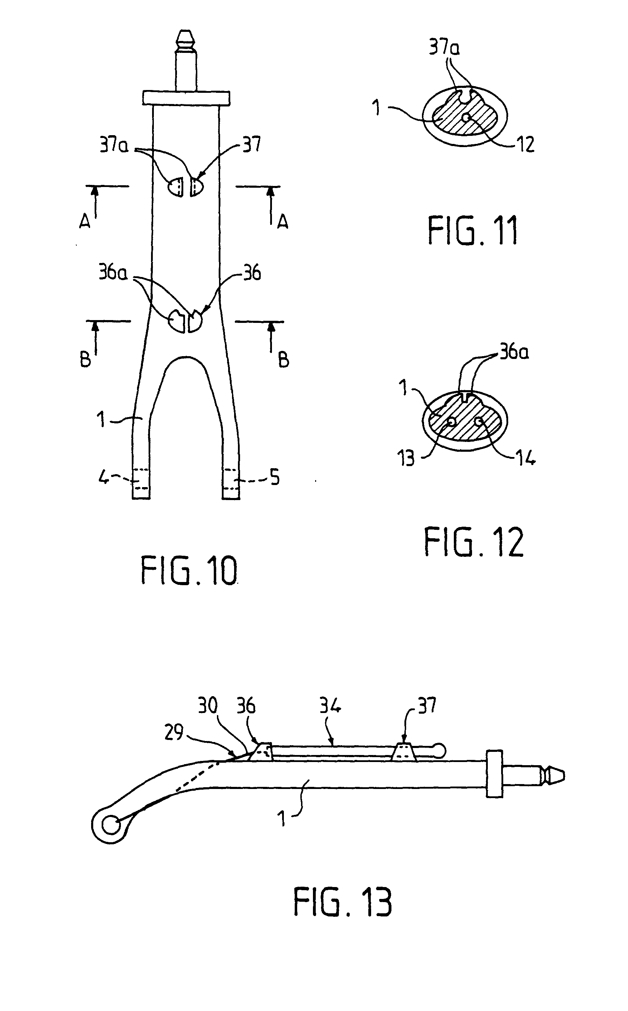

Les figures 10 à 13 illustrent un mode de réalisation préféré des moyens prévus sur le corps d'instrument 1 en vue du blocage rapide du fil interdentaire 29 suivant la figure 8. Le corps 1 comporte ici, sur le dessus, une butée-guide fendue 36 à la partie avant du corps d'instrument 1, et une pince de maintien 37 à la partie arrière du corps 1. La butée-guide 36 comprend deux branches rigides 36a formées d'une seule pièce avec le corps 1 en étant séparées l'une de l'autre par une fente longitudinale étroite (voir figure 12) permettant le passage du tronçon de fil 30. La position de la butée-guide 36 sur le corps 1 est choisie, en fonction de la longueur du tronçon de fil 30 entre le bouton d'arrêt 31 et la tige-guide 34, de manière que le tronçon de fil 30 monté selon les figures 9a à 9c puisse être bloqué à l'état tendu par simple accrochage de la tige-guide 34 derrière la butée-guide 36, de la manière visible sur la figure 13. La pince de maintien 37 comporte, comme le montre la figure 11, deux branches espacées 37a élastiques entre lesquelles la tige-guide 34 accrochée derrière la butée-guide 36 peut être introduite par encliquetage élastique et être maintenue contre le corps d'instrument 1.

Bien entendu, le fonctionnement correct de ce système de blocage du fil interdentaire 29 implique l'utilisation d'un fil interdentaire 29 de longueur calibrée et un positionnement précis de la butée-guide 36 sur le corps 1 de l'instrument afin que le fil interdentaire 29 soit parfaitement tendu lorsqu'il se trouve bloqué par la butée-guide 36.

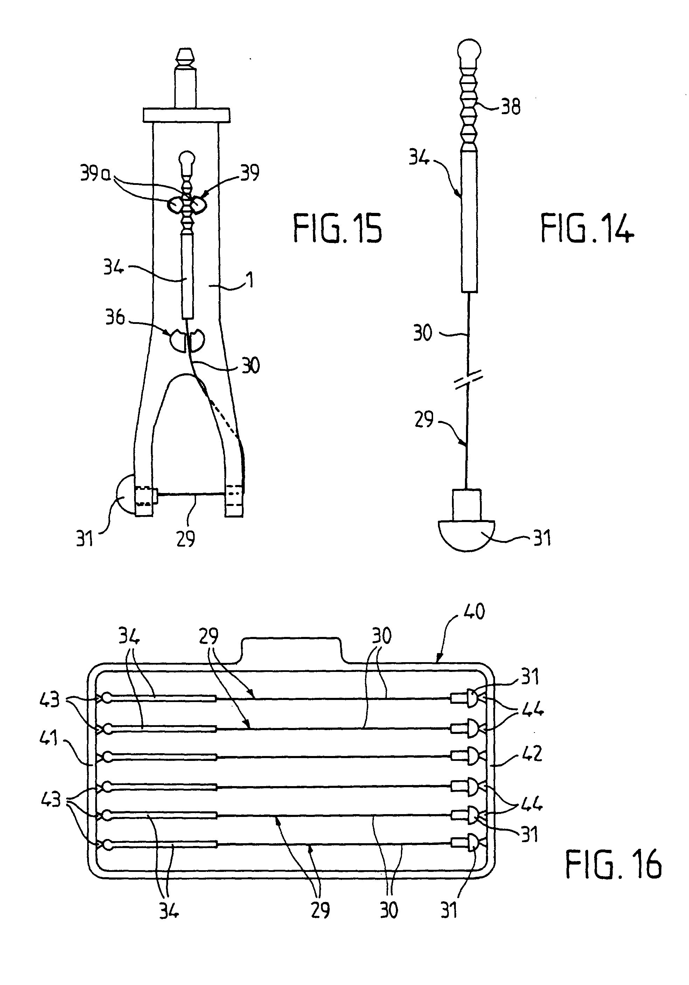

Les figures 14 et 15 illustrent une variante dans laquelle la tige-guide 34 du fil interdentaire 29 comporte une rangée longitudinale de stries ou encoches 38 transversales. Le corps 1 de l'instrument comporte ici, à la place de la pince de maintien 37 suivant les figures 10 à 13, une pince d'accrochage 39 ayant deux dents 39a opposées, effilées, entre lesquelles la tige-guide 34 du fil interdentaire 29 peut être insérée à l'endroit de ses stries ou encoches 38. Ainsi, après montage du fil interdentaire 29 sur le corps d'instrument 1 de la manière illustrée par les figures 9a à 9c, le fil 29 est tendu et bloqué à l'état tendu sur le corps 1 par insertion de sa tige-guide 34 dans la pince 39 à l'endroit d'une des encoches 38, ce qui immobilise la tige 34 par rapport au corps 1.

Ce mode de réalisation du fil interdentaire 29 et du corps d'instrument 1 permet, par conséquent, de régler la tension du fil interdentaire 29 et de compenser des tolérances de fabrication, notamment du fil 29.

La butée-guide 36 prévue néanmoins sur le corps d'instrument 1 ne sert ici plus de butée, mais uniquement de guide pour le tronçon de fil 30 du fil interdentaire 29. Ce guide pourrait être remplacé par tout autre moyen de guidage agissant sur le fil 30 ou sur la tige 34, ou pourrait également être supprimé éventuellement.

La figure 16 représente un ensemble de plusieurs fils interdentaires 29 d'une conception particulièrement avantageuse du point de vue fabrication et commercialisation. Plusieurs tronçons de fil interdentaire 30 comportant chacun un bouton d'arrêt 31 et une tige-guide 34 sont ici disposés côte à côte dans un plan, à l'intérieur d'un cadre 40 rectangulaire. Les tiges-guides 34 et les boutons d'arrêt 31 sont moulés d'une seule pièce en matière plastique avec deux branches opposées 41 et 42 du cadre 40, par surmoulage des extrémités des tronçons de fil 30, les tiges-guides 34 et les boutons d'arrêt 31 étant reliés aux branches 41 et 42 du cadre 40 par des parties frangibles 43, 44 de section réduite.

Pour dégager un fil interdentaire 29 de cet ensemble en vue de son montage sur l'instrument de nettoyage dentaire, il suffit d'exercer un effort suffisant sur le bouton d'arrêt 31 et sur la tige-guide 34 de ce fil 29, par rapport aux branches 42 et 41 du cadre 40, pour rompre les parties frangibles 44, 43 et libérer ainsi le fil interdentaire 29.

Bien entendu, ce mode de réalisation est applicable aussi bien aux fils interdentaires selon la figure 8 qu'à ceux selon la figure 14.

Il y a lieu de noter que si dans les modes de réalisation illustrés, le corps d'instrument 1 est toujours représenté comme étant destiné à être accouplé au manche d'un hydropulseur, le fil interdentaire 29 suivant les figures 8 et 14 pourrait, dans le cadre de l'invention, être utilisé sur des corps d'instrument 1 prévus pour servir uniquement de porte-fil interdentaire et non pas également d'instrument de nettoyage dentaire à double jet d'eau.

## Revendications

1. Instrument de nettoyage dentaire comprenant un corps (1) se terminant à une extrémité par une fourche à deux branches (2, 3), et un fil interdentaire (29), chaque branche de la fourche comportant au voisinage de son extrémité libre un chas (4, 5) pour le passage du fil interdentaire, les deux chas étant séparés l'un de l'autre d'une distance déterminée et présentant chacun un diamètre déterminé, le corps comprenant en arrière de la fourche des moyens pour fixer, à l'état tendu, le fil interdentaire passant dans les chas des deux branches, caractérisé par le fait que le fil interdentaire consiste en un tronçon de fil (30) de longueur supérieure à ladite distance séparant les deux chas, dont une extrémité est solidaire d'une tige-guide (34) ayant un diamètre supérieur au diamètre du tronçon de fil, mais inférieur au diamètre des chas et dont l'autre extrémité est solidaire d'un bouton d'arrêt (31) ayant un diamètre supérieur au diamètre des chas, et que lesdits moyens sur le corps comprennent une butée-guide (36) présentant une fente de largeur supérieure au diamètre du tronçon de fil, mais inférieure au diamètre de la tige-guide, ladite butée-guide étant positionnée sur le corps de manière qu'après montage du fil interdentaire sur le corps, par passage du tronçon de fil à l'aide de la tige-guide à travers les deux chas jusqu'à l'appui du bouton d'arrêt contre l'une des branches de la fourche, le fil interdentaire puisse être bloqué à l'état tendu du tronçon de fil sur le corps par simple accrochage de la tige-guide derrière la butée-guide.

2. Instrument suivant la revendication 1, caractérisé par le fait que le bouton d'arrêt (31) est en forme de champignon avec une tête (33) et un pied (32), ce dernier étant conformé de manière à permettre le maintien de bouton d'arrêt par friction ou par encliquetage dans le chas en cas de rupture du tronçon de fil.

3. Instrument suivant la revendication 1 ou 2, caractérisé par le fait que la tige-guide (34) présente un renflement de préhension (35) à son extrémité libre.

4. Instrument suivant l'une quelconque des revendications précédentes,caractérisé par le fait que la tige-guide (34) et le bouton d'arrêt (31) sont en matière plastique rigide et sont formées par surmoulage des extrémités du tronçon de fil.

5. Instrument suivant la revendication 4, caractérisé par le fait que le fil interdentaire fait partie d'un ensemble de plusieurs fils interdentaires comprenant plusieurs tronçons de fil (30) disposés côte-à-côte dans un plan, dont les boutons d'arrêt (31) et les tiges-guides (34) sont reliées par des parties frangibles (44, 43) de section réduite respectivement à deux branches opposées (42, 41) d'un cadre (40) rectangulaire moulé en matière plastique d'une seule pièce avec les boutons d'arrêt et les tiges-guides, par surmoulage des tronçons de fil.

6. Instrument suivant la revendication 1, caractérisé par le fait que lesdits moyens sur le corps (1) comprennent, en outre, une pince (37) située en arrière de la butée-guide (34) pour le maintien et le blocage, sur le corps, de la tige-guide accrochée derrière la butée-guide.

## Patentansprüche

1. Zahnreinigungsinstrument bestehend aus einem Körper (1), der an einem Ende in einer Gabel mit zwei Armen (2, 3) endet, und einer Zahnseide (29), wobei jeder Arm der Gabel im Bereich seines freien Endes ein Öhr (4, 5) aufweist, durch das die Zahnseide verläuft, wobei die beiden Öhre in einem bestimmten Abstand voneinander angeordnet sind und jeweils einen bestimmten Durchmesser aufweisen, wobei der Körper (1) hinter der Gabel Mittel aufweist, um die durch die Öhre der beiden Arme verlaufende Zahnseide in gespanntem Zustand zu befestigen,
**dadurch gekennzeichnet,**
**dass** die Zahnseide aus einem Stück Zahnseide (30) besteht, das länger ist als der genannte Abstand zwischen den beiden Öhren, dessen eines Ende mir einem Führungsstab (34) fest verbunden ist, dessen Durchmesser größer ist als der Durchmesser des Stücks Zahnseide, aber kleiner als der Durchmesser der Öhre, und dessen anderes Ende mit einem Anschlagknopf(31) fest verbunden ist, dessen Durchmesser größer ist als der Durchmesser der Öhre, und dass diese an dem Körper bestehenden Mittel einen Führungsanschlag (36) umfassen, der einen Schlitz aufweist, dessen Breite größer ist als der Durchmesser des Stücks Zahnseide, aber kleiner als der Durchmesser des Führungsstabs, wobei der Führungsanschlag dergestalt an dem Körper angeordnet ist, dass nach dem Anbringen der Zahnseide an dem Körper, indem das Stück Zahnseide mit Hilfe des Führungsstabs durch die beiden Öhre gefädelt wird, bis der Anschlagknopf an einem der beiden Arme der Gabel in Anschlag kommt, die Zahnseide in gespanntem Zustand durch einfaches Einhaken des Führungsstabs hinter dem Führungsanschlag an dem Körper gesichert werden kann.

2. Instrument nach Anspruch 1,
**dadurch gekennzeichnet,**
**dass** der Anschlagknopf(31) pilzförmig mit einem Kopf (33) und einem Fuß (32) ausgeführt ist, wobei letzterer dergestalt geformt ist, dass er den Halt des Anschlagknopfs durch Reibung oder durch Einrasten in dem Öhr im Falle eines Reißens des Stücks Zahnseide ermöglicht.

3. Instrument nach Anspruch 1 oder 2,
**dadurch gekennzeichnet,**
**dass** der Führungsstab (34) an seinem freien Ende eine Griffverstärkung (35) aufweist.

4. Instrument nach einem der vorherigen Ansprüche,
**dadurch gekennzeichnet,**
**dass** der Führungsstab (34) und der Anschlagknopf(31) aus starrem Kunststoff bestehen und unter Überformen der Enden des Stücks Zahnseide hergestellt werden.

5. Instrument nach Anspruch 4,
**dadurch gekennzeichnet,**
**dass** die Zahnseide Teil einer Gesamtanordnung ist, die mehrere Stücke Zahnseide (30) aufweist, welche nebeneinander in einer Ebene angeordnet sind und deren Anschlagknöpfe (31) und Führungsstäbe (34) durch Sollbruchteile (44, 43) mit geringerem Querschnitt mit zwei einander gegenüberliegenden Seitenteilen (42, 41) eines mit den Anschlagknöpfen und den Führungsstäben einstückig aus Kunststoff gegossenen Rahmens(40) verbunden sind, wobei die Zahnseide überformt werden.

6. Instrument nach Anspruch 1,
**dadurch gekennzeichnet,**
**dass** die genannten Mittel an dem Körper (1) ferner eine hinter dem Führungsanschlag (36) befindliche Klemme (37) beinhalten können, die den hinter dem Führungsanschlag eingehakten Führungsstab (34) festhält und an dem Körper sichert.

## Claims

1. Dental cleaning instrument comprising a body (1) ending at one end in a two-armed fork (2, 3), and an interdental floss (29), each arm of the fork having, near its free end, an eye (4, 5) for the passage of the interdental floss, the two eyes being separated from one another by a determined distance and each having a determined diameter, the body comprising, to the rear of the fork, means for fixing, taut, the interdental floss passing through the eyes of the two arms, characterized in that the interdental floss consists of a piece of floss (30) of a length greater than the said distance separating the two eyes, one end of which is secured to a guide rod (34) having a diameter greater than the diameter of the piece of floss but less than the diameter of the eyes, and the other end of which is secured to a stop button (31) with a diameter greater than the diameter of the eyes, and in that these said means on the body comprise a guide stop (36) having a slot of a width greater than the diameter of the piece of floss but less than the diameter of the guide rod, the said guide stop being positioned on the body in such a way that after the interdental floss has been mounted on the body, by passing the piece of floss, using the guide rod, through the two eyes until the stop button rests against one of the arms of the fork, the interdental floss can be immobilized with the piece of floss taut on the body simply by catching the guide rod behind the guide stop.

2. Instrument according to Claim 1, characterized in that the stop button (31) is in the shape of a mushroom with a head (33) and a stalk (32), the latter being shaped in such a way as to allow the stop button to be held by friction or by snap fastening in the eye should the piece of floss break.

3. Instrument according to Claim 1 or 2, characterized in that the guide rod (34) has a bulge (35) for grasping at its free end.

4. Instrument according to any one of the preceding claims, characterized in that the guide rod (34) and the stop button (31) are made of rigid plastic and are formed by overmoulding the ends of the piece of floss.

5. Instrument according to Claim 4, characterized in that the interdental floss forms part of a collection of several interdental flosses comprising several pieces of floss (30) positioned side by side in a plane, the stop buttons (31) and guide rods (34) of which are connected by frangible parts (44, 43) of reduced cross section to, respectively, two opposed arms (42, 41) of a rectangular frame (40) moulded in plastic as a single piece with the stop buttons and guide rods, by overmoulding the pieces of floss.

6. Instrument according to Claim 1, characterized in that the said means on the body (1) further comprise a clip (37) located to the rear of the guide stop (34), for holding and immobilizing on the body the guide rod which is caught behind the guide stop.
